# EUROPÄISCHE PATENTANMELDUNG

(11) **EP 2 051 069 A2**
(43) Veröffentlichungstag der Anmeldung: **22.04.2009**
(21) Anmeldenummer: 08018025.0
(22) Anmeldetag: 15.10.2008
(51) Int. Cl.: G01N 27/76

(54) **Paramagnetischer Gassensensor sowie Verfahren zum Betrieb desselben**

(30) Priorität: 18.10.2007 DE 102007049867
(71) Anmelder: ABB AG, 68309 Mannheim (DE)
(72) Erfinder: Krippner, Peter, Dr.-Ing., 76199 Karlsruhe (DE); Szasz, Paul, Dipl.-Ing., 68723 Plankstadt (DE); Andres, Berthold, Dr., 63599 Biebergemünd (DE); Wetzko, Manfred, Dr., 69198 Schriesheim (DE); Bauer, Thomas, Dipl.-Phys., 61350 Bad Homburg (DE); Schmidt, Karl-Michael, Dipl.-Phys., 47447 Moers (DE)
(74) Vertreter: Schmidt, Karl Michael

(57) **Zusammenfassung**

Die Erfindung betrifft einen paramagnetischen Gassensor mit mindestens einem beweglich befestigten Probenkörper (1), der sich in einem inhomogenen Magnetfeld und innerhalb einer das Messgas enthaltenden Messkammer (6) befindet oder vom Messgas umgeben ist. Um hierbei zu erreichen, dass man mit wenigen einzelnen Bauelementen auskommt, und sich auch als monolithischer Sensorchip fertigungstechnisch umsetzen lässt und ausserdem feinfühliger messen kann, ist erfindungsgemäß vorgeschlagen, dass der Gassensor in Mikrostrukturtechnik ausgeführt ist, und dass über zumindest teilweise in der Mikrostruktur implementierte oder darauf einwirkende Mittel (7,8,10) der oder die Probenkörper (1) derart zu Schwingungen anregbar sind, dass damit zumindest über einen Parameter dieser Schwingung die Konzentrationsbestimmung einer Messgaskomponente im Messgas vornehmbar ist.

## Beschreibung

Die Erfindung betrifft einen paramagnetischen Gassensor mit mindestens einem beweglich befestigten Probenkörper, der sich in einem inhomogenen Magnetfeld und innerhalb einer das Messgas enthaltenden Messkammer befindet oder vom Messgas umgeben ist, sowie ein Verfahren zum Betrieb desselben, gemäß Oberbegriff der Patentansprüche 1 und 27.

Aus dem Stand der Technik sind Auslenkungssysteme bekannt, bei denen im inhomogenen Magnetfeld ein vom Messgas umströmter Körper in Abhängigkeit zur im Messgas vorliegenden Sauerstoffkonzentration ausgelenkt wird. Die Auslenkung wird dabei mit optischen Mitteln erfasst und daraus die Sauerstoffkonzentration bestimmt.

Es sind außerdem Systeme bekannt, bspw wie in der DE 198 03 990 A1 bei denen der Auslenkungskörper zu Schwingungen angeregt wird. Dabei werden jedoch aufgrund der Bauform nur niedrige Resonanzfrequenzen realisiert und eine schlechte Güte erreicht.

Es ist daher die Aufgabe der vorliegenden Erfindung, einen paramagnetischen Sauerstoffsensor zu schaffen, welcher mit wenigen einzelnen Bauelementen auskommt, und sich auch als monolithischer Sensorchip fertigungstechnisch umsetzen lässt und ausserdem empfindlicher und driftärmer messen kann.

Die gestellte Aufgabe wird im Hinblick auf einen paramagnetischen Gassensor erfindungsgemäß durch die kennzeichnenden Merkmale des Patentanspruches 1 gelöst.

Die rückbezogenen abhängigen Ansprüche 2 bis 26 geben vorteilhafte Weiterbildungen der Erfindung wieder.

Im Hinblick auf eine Verfahren der gattungsgemäßen Art ist die gestellte Aufgabe erfindungsgemäß durch die kennzeichnenden Merkmale des Patentanspruches 27 gelöst.

Weitere vorteilhafte Ausgestaltungen des erfindungsgemäßen Verfahrens sind in den übrigen abhängigen Ansprüchen angegeben.

Kern der Erfindung ist, dass der Gassensor in Mikrostrukturtechnik ausgeführt ist, und dass über zumindest teilweise in der Mikrostruktur implementierte oder darauf einwirkende Mittel der oder die Probenkörper derart zu Schwingungen anregbar sind, dass damit zumindest über einen Parameter dieser Schwingung die Konzentrationsbestimmung einer Messgaskomponente im Messgas vornehmbar ist.

Hierbei steht im Vordergrund, dass erstmals ermöglicht wurde, die paramagnetische Gasmessung mit der Methode eines "schwingenden" Probenkörpers in die Bauform eines mikrostrukturierten Gassensors zu implementieren. Dies ist nicht trivial, weil sowohl die Schwingungsanregung selbst als auch die dabei nur extrem kleinen Schwingmassen und die damit einhergehenden hohen Resonanzfrequenzen mit Blick auf eine genaue Messung konstruktiv nicht trivial ist.

Durch die mikrostrukturierte Bauform wird außerdem erreicht, dass hohe Resonazfrequenzen erzielbar sind. Dies wiederum führt zu vielen Schwingungszyklen pro Zeiteinheit und damit zu kurzen Messzeiten und außerdem zu hoher Präzision.
Ein weiterer Vorteil besteht darin dass die durch die Miniaturisierung erreichten hohen Resonanzfrequenzen der Sensor unempflindlich gegen niederfrequente äußere Störungen wird. Faktisch heisst dies, dass der Sensor bzw die Schwinungsfähigen Teile im Sensor bspw bei einer Frequenz größer als 200 Hz schwingen. Äußere Störfrequenzen liegen deutlich darunter.
Ausserdem sind nun auch statische Einflüsse vernachlässigbar, wie bspw Schwerkrafteinflüsse bei Schräglage des Sensors, weil das schwingende System diese ohne Einfluss lässt.

Das mikrostrukturierte Schwingungssystem ist energiesparend durch die kleinen Schwingmassen und erreicht eine hohe Güte.

Außerdem wird durch die weiterhin noch ausgestalteten engen Spalten ein großer Messeffekt erzielt.

Besondere Vorteile ergeben sich dabei, wenn man den mikrostrukturierten Gassensor aus einem Schichtaufbau von zumindest teilweise im Ätzverfahren herstellbaren Strukturen aufbaut.

Zur Auslesung der Schwingungsparameter sind in oder auf der Mikrostruktur entsprechende Sensoren angeordnet.

Dabei werden zwei alternative Schwingsysteme betrachtet. Das erste ist, dass nur der Probenkörper als einzige Schwingmasse vorgesehen ist.

Alternativ ist vorgesehen, dass mindestens eine weitere Schwingmasse vorgesehen ist, welche schwingungstechnisch an die erste Schwingmasse angekoppelt ist, und ein Feder-Masse-/Probenkörper-System bildet.

Bezüglich der Schwingungserzeugung sind ebenso verschieden Alternativen angegeben. Eine erste ist, dass zur Erzeugung eines inhomogenen, statischen oder zeitlich veränderlichen Magnetfeldes ein zumindest teilweise außerhalb der Mikrostruktur des Sensors implementiertes Erregersystem vorgesehen ist.

In vorteilhafter Ausgestaltung ist vorgesehen, dass mindestens ein piezoelektrisches Element eine durch den Messeffekt hervorgerufene elastische Verformung im Bereich der Aufhängung erfasst, damit zumindest über einen Schwingungsparameter dieser erfassten Schwingung die Konzentrationsbestimmung einer Messgaskomponente im Messgas vornehmbar ist.

Eine weitere Ausgestaltung sieht vor, dass die Mittel zur Erzeugung einer erzwungenen oder resonanten Schwingung direkt im oder auf dem Probenkörper oder der Probenkörperaufhängung implementiert sind.

Für die Verwendung von piezoelektrischen Elementen ergeben sich wiederum 2 Alternativen.
Eine Erste ist, dass das piezoelektrische Element ein piezoresistives Element ist, über welches die durch die Schwingung hervorgerufene Verformung detektierbar ist.

Eine Zweite ist, dass das piezoelektrische Element ein Piezokristall ist, mit welchem elektrisch auch eine Verformung zur Erzeugung einer Schwingung generierbar ist. In diesem Fall kann sogar Schwingungsanregung als auch Messung im Zeitmultiplexverfahren mittels derselben Piezoelemente vorgenommen werden.

Ein weitere Möglichkeit zur Schwingungsanregung ergibt sich daraus, dass zur Erzeugung einer Schwingung des Probenkörpers auf demselben oder in derselben eine Leiterschleife implementiert ist, die von außen induzierbar ist.

In weiterer vorteilhafter Ausgestaltung ist vorgesehen, dass die magnetischen Polschuhe mit einem Permanentmagnetsystem versehen und verbunden sind.

Eine weitere Ausgestaltung zur Schwingungserfassung oder sogar Generierung ist, dass der verschwenkbare Probenkörper mit einem demgegenüber ortsfesten Halterahmen einen elektrischen Kondensator bildet, um die aus der Schwingung resultierende Änderung der elektrischen Kapazität zu erfassen, woraus signalverarbeitungstechnisch die Sauerstoffkonzentration im Messgas ermittelbar ist.

Alternativ zum Permantmagneten kann auch vorgesehen sein, dass die magnetischen Polschuhe mit einem Elektromagnetsystem versehen und verbunden sind.

Zur Felderregung sind auch verschiedene Alternativen angegeben.

Eine Erste ist, dass zur Erzeugung eines inhomogenen statischen Magnetfeldes ein Erregersystem eingesetzt wird, das zumindest teilweise in die Mikrostruktur des Sensors integriert ist.

Eine Zweite ist, dass zur Erzeugung eines inhomogenen zeitlich veränderlichen Magnetfeldes ein Erregersystem eingesetzt wird, das zumindest teilweise in die Mikrostruktur des Sensors integriert ist.

Auch zur Schwingungsausrichtung sind zwei Alternativen angegeben, nämlich dass der Probenkörper so platziert und aufgehängt ist, dass dieser parallel zur Chipoberfläche des Sensors schwingt, oder dass der Probenkörper so platziert und aufgehängt ist, dass dieser orthogonal zur Chipoberfläche des Sensors schwingt.

Bezüglich der oben schon erwähnten mehreren Schwingmassen ist ausgestaltet, dass die mehreren Schwingmassen alle Probenkörper sind. Dabei ist ausgestaltet, dass zusätzlich zum ersten schwingenden Probenkörper mindestens ein weiterer schwingungsfähiger gelagerter Probenkörper angeordnet ist, der sich im homogenen Magnetfeld oder in einem näherungsweise magnetfeldfreien Bereich befindet.

In Bezug darauf kann aber auch alternativ ausgestaltet sein, dass zusätzlich zum ersten schwingenden Probenkörper mindestens ein weiterer schwingungsfähiger gelagerter Probenkörper angeordnet ist, der sich in einer Referenzgasatmosphäre oder im Vakuum befindet.

In weiterer vorteilhafter Ausgestaltung ist angegeben, dass der ausgewertete Schwingungsparameter die Schwingungsfrequenz, der Offset, die Amplitude, die Abklingkurve oder die Dämpfung ist.

Weiterhin ist ausgestaltet, dass der erste und der zweite Probenkörper zu einem gemeinsamen Schwingungssystem gekoppelt sind.

Hinsichtlich der Auswertung ist ausgestaltet, dass der ausgewertete Schwingungsparameter die Phasenbeziehung der Schwingungen der Einzelkörper zueinander ist.

Weiterhin ist ausgestaltet, dass der ausgewertete Schwingungsparameter die Phasenbeziehung der Schwingung des Probenkörpers relativ zu einer ungekoppelten Referenzschwingung ist.

In weiterer vorteilhafter Ausgestaltung ist vorgesehen, dass das piezoelektrische Element in dem Bereich der Aufhängung angeordnet ist, in welchem eine maximale Materialdehnung stattfindet.

Weiterhin ist vorteilhaft ausgestaltet, dass die Aufhängung zur Herbeiführung einer hohen Materialdehnung mit einer örtlichen Spannungskonzentratoreinheit ausgestattet ist.

Dabei ist vorgesehen, dass der Probenkörper aus mehreren symmetrisch zueinander angeordneten Teilkörpern gleicher Gestalt besteht, wobei der Schwerpunkt des Probenkörpers im durch die Aufhängung definierten Schwerpunkt des Systems liegt.

Weiterhin ist vorgesehen, dass der Probenkörper kreuzförmig ausgebildet ist und in seinem Schwerpunkt durch eine zweiachsige Aufhängung gehalten ist.

In vorteilhafter Ausgestaltung ist angegeben, dass die zweiachsige Aufhängung aus zwei zueinander orthogonal verlaufenden Aufhängungsachsen gebildet ist, die sich von einem äußeren Halterahmen aus nach Innen erstrecken.

In vorteilhafter Ausgestaltung ist angegeben, dass mindestens eine Spannungskonzentratoreinheit pro Aufhängungsachse vorgesehen ist, die sich im Schnittbereich zum kreuzförmigen Probenkörper befindet.

In vorteilhafter Ausgestaltung ist angegeben, dass die Spannungskonzentratoreinheit aus einer Verjüngungsstelle der Aufhängung gebildet ist, worin zwei piezoresistive Elemente radial beabstandet zueinander angeordnet sind, in welchen bei Schwingung der Aufhängung gegensinnige Spannungen auftreten.

In vorteilhafter Ausgestaltung ist angegeben, dass die radiale Beabstandung zwischen den beiden piezoresistiven Elementen über einen Spalt erfolgt.

In vorteilhafter Ausgestaltung ist angegeben, dass zur Optimierung des als elektrisches Signal vorliegenden Messeffekts eine Brückenbeschaltung des mindestens einen piezoresistiven Elements zum Einsatz kommt.

In vorteilhafter Ausgestaltung ist angegeben, dass zur Vermeidung von Störeinflüssen der den elektrischen Kondensator bildende Bereich getrennt ist von der das Messgas enthaltenden Messkammer.

In vorteilhafter Ausgestaltung ist angegeben, dass der Probenkörper kreuzförmig ausgebildet ist und in seinem Schwerpunkt durch eine zweiachsige Aufhängung gehalten ist.

In vorteilhafter Ausgestaltung ist angegeben, dass die zweiachsige Aufhängung aus zwei zueinander orthogonal verlaufenden Aufhängungsachsen gebildet ist, die von einem äußeren Halterahmen aus nach Innen erstrecken.

Eine weitere Ausgestaltung besteht darin, dass der Probenkörper oder das Feder-Masse-/Probenkörper-System zungenförmig ausgebildet ist. Dies berücksichtigt, dass der Probenkörper keine mittig gelagerte Hantelförmige Gestalt haben muss, sondern dass dieser auch einseitig wie ein Paddel oder eine Zunge angelenkt sein und schwingen kann.

In vorteilhafter Ausgestaltung ist angegeben, dass der Sensor im Wesentlichen durch Ätzverfahren aus einem Vollmaterial herausgearbeitet ist.

In vorteilhafter Ausgestaltung ist angegeben, dass der Sensor zu wesentlichen Anteilen aus Silizium, Glas oder Diamant besteht.

In vorteilhafter Ausgestaltung ist angegeben, dass zumindest Teile des Sensors durch Abscheideverfahren wie Gasphasenepitaxie oder Sputtern hergestellt ist.

Kern der verfahrensgemäßen Erfindung ist, dass der in Mikrostrukturtechnik ausgeführte Gassensor über zumindest teilweise in der Mikrostruktur implementierte oder darauf einwirkende Mittel im Bereich seines Probenkörpers oder eines Feder-Masse-/Probenkörper-Systems derart zu Schwingungen anregbar ist, dass damit zumindest über einen Parameter dieser Schwingung die Konzentrationsbestimmung einer Messgaskomponente im Messgas vornehmbar ist.

Verfahrensmäßig ist dabei ausgestaltet, dass aus mindestens einem Schwingungsparamter die aktuelle Konzentration einer paramagnetischen Messgaskomponente ermittelt wird, indem der Probenkörper über eine auf oder in demselben implementierte Leiterbahnstruktur ein zeitlich veränderlicher Strom induziert wird.

In weiterer vorteilhafter Ausgestaltung des Verfahrens ist vorgesehen, dass aus mindestens einem Schwingungsparamter die aktuelle Konzentration einer paramagnetischen Messgaskomponente ermittelt wird, indem der Probenkörper zur Schwingung über eine Zeit dt angeregt wird, und dass unmittelbar nach Beendigung der Schwingungsanregung die Schwingungsrelaxation erfasst und aus den Schwingungsparametern der Relaxation die Konzentration der Messgaskomponenten ermittelt wird. Dies entspricht dem weiter oben schon angedeuteten Zeitmultiplexverfahren, bei welchem Schwingungserzeugung und Schwingungsparameterermittlung über ein und dieselben Elemente erfolgen kann

Dabei ist vorgeschlagen, dass zur Schwingungsanregung entweder auf dem Probenkörper oder dem Feder-Masse-/Probenkörper-System angeordnete oder außerhalb derselben angeordnete Leiterschleifen so bestromt werden, dass durch induktive Ankoppelung eine Schwingung desselben entsteht.

Neben der genannten induktiven Methode die Schwingungsanregung so erfolgen, dass entweder auf dem Probenkörper oder dem Feder-Masse-/Probenkörper-System angeordnete oder außerhalb derselben angeordnete Piezokristalle so bestromt werden, dass dieselben in Schwingung versetzt werden.

Eine weitere alternative Anregungsmethode ist, dass die Schwingungsanregung extern erfolgt, z. B. durch Stoss, Schlag oder Vibration.

Dabei wird die Anregung zweckmäßigerweise so erfolgen, dass die Schwingungsanregung des Probenkörpers oder des Feder-Masse-/Probenkörper-Systems immer nahe seiner Resonanzfrequenz erfolgt.

Dabei können Anregungen erfolgen, derart dass der Probenkörper oder das Feder-Masse-/Probenkörper-System eine lineare oder rotatorische Schwingung ausführt bzw ausführen.

Weiterhin ist vorgesehen, dass die Schwingungsanregung durch Pulsation des Messgasstromes oder eines anderen pulsierenden Gasstromes erfolgt.

Sie kann aber auch durch durch thermische Expansion des Gases im Gasraum, z. B. über gepulste Laserstrahleinkopplung, erfolgen oder durch Schwingungsanregung durch Oberflächenwellen.

Ein weitere Möglichkeit besteht darin, dass die Schwingungsanregung durch Schallwandlerschichten auf Basis von Elektreten erfolgt.

Hinsichtlich der Auswertung ist vorgesehen, dass der ausgewertete Schwingungsparameter die Schwingungsfrequenz, der Offset, die Amplitude, die Abklingkurve oder die Dämpfung oder die Phasenbeziehung der Schwingungen des Probenkörpers oder des Feder-Masse-/Probenkörper-Systems zueinander ist.

Es kann auch vorgesehen sein, dass der ausgewertete Schwingungsparameter die Phasenbeziehung der Schwingung des Probenkörpers relativ zu einer ungekoppelten Referenzschwingung ist.

Ein kapazitive Methode besteht darin, dass der verschwenkbare Probenkörper mit einem demgegenüber ortsfesten Halterahmen einen elektrischen Kondensator bildet, um die aus der Verschwenkung resultierende Änderung der elektrischen Kapazität zu erfassen, woraus signalverarbeitungstechnisch die Sauerstoffkonzentration im Messgas ermittelt wird.

Dabei kann zur Vermeidung von Störeinflüssen der den elektrischen Kondensator bildende Bereich getrennt sein von der das Messgas enthaltenden Messkammer. Eine weitere Möglichkeit der Schwingungserfassung ist ähnlich der Erfassung bekannter nichtschwingender, d.h. nur auslenkender Systeme, dass der oder die Schwingungsparameter über optische Elemente (z. B. durch Strahlablenkung oder andere Beeinflussung von Strahlparametern) gewonnen werden.
Weitere Auslesemethoden der Schwingungsparameter sind durch über induktive Elemente oder Elektrete gegeben.

Zur Optimierung des als elektrisches Signal vorliegenden Messeffekts können die piezoresistiven Elemente also mit einer Brückenschaltung versehen werden.

Gemäß einer bevorzugten Ausführungsform der Erfindung ist der Probenkörper aus mehreren symmetrisch zueinander angeordneten Teilkörpern gleicher Gestalt gebildet, wobei der Schwerpunkt des Probenkörpers im durch die Aufhängung definierten Schwerpunkt des Systems liegt. Ganz vorzugsweise kann ein derartiger Probenkörper kreuzförmig gestaltet werden und in seinem Schwerpunkt durch eine zweiachsige Aufhängung gehalten sein. Dabei ist die zweiachsige Aufhängung vorzugsweise aus zwei zueinander orthogonal verlaufenden Aufhängungsachse gebildet, die sich von einem äußeren Halterahmen aus nach innen erstreckt. Diese bevorzugte Ausführungsform eignet sich besonders, um den erfindungsgemäßen paramagnetischen Sauerstoffsensor mit piezoelektrischer Auswertung in Form eines Silizium-Chips herzustellen.

Bei der Umsetzung eines Silizium-Sensor beläuft sich die Höhe der Struktur im Bereich der Spannungskonzentratoreinheit vorzugsweise im Bereich von 10-500 Mikrometern. Die Aufhängungsstege weisen eine typische Breite von 100 Mikrometern auf, wobei die Verjüngungen an der Stelle der Spannungskonzentrator-Einheit im Bereich von 10-20 Mikrometer liegen sollten. Somit lassen sich Außenabmessungen für den Siliziumsensor realisieren, welche im Bereich von 10 x 10 mm² - 20 x 20 mm² liegen.

Ist der paramagnetische Sauerstoffsensor nach der Variante der kapazitiven Auswertung ausgebildet, so lässt sich eine ähnliche Struktur umsetzen. Eine zweiachsige Aufhängung aus zwei zueinander orthogonal verlaufenden Aufhängungsachsen können ebenfalls von einem äußeren Halterahmen aus nach innen geführt werden. Der Probenkörper selbst kann vorzugsweise ebenfalls kreuzförmig ausgebildet sein, wobei der Halterahmen zur Bildung eines elektrischen Kondensators gemeinsam mit dem schwingenden Probekörper Anformungen zur Ausbildung entsprechender Kondensatorspalte erhält. Eine vorteilhafte Breite dieser Kondensatorspalte liegt im Bereich von 10-50 Mikrometern. Die Breite der Aufhängung dieser kapazitiven Variante weist eine typische Breite von vorzugsweise 10-20 Mikrometern auf.

Weitere, die Erfindung verbessernde Maßnahmen werden nachstehend gemeinsam mit der Beschreibung bevorzugter Ausführungsformen der Erfindung in beiden Varianten näher dargestellt. Es zeigt:
- Fig.1: eine Draufsicht auf eine Anordnung mit Probenkörper, Aufhängung und Halterahmens eines paramagnetischen Sauerstoffsensors in einer ersten Variante,
- Fig.2: einen Längsschnitt der Anordnung gemäß Fig.1 entlang der Schnittlinie A-A,
- Fig.3: ein Detail im Bereich der Aufhängung des Probenkörpers gemäß Fig.1 in einer ersten Ausführungsform,
- Fig.4: ein Detail der Aufhängung des Probenkörpers gemäß Fig.1 in einer weiteren Ausführungsform, und
- Fig.5: eine Draufsicht einer Anordnung mit Probenkörper, Aufhängung und Halterahmen in einer weiteren Variante der Erfindung.
- Fig. 6: Besondere Ausgestaltung mit einem Doppelschwingsystem
- Fig. 7: Messen in Relaxationsphase einer angeregten Schwingung

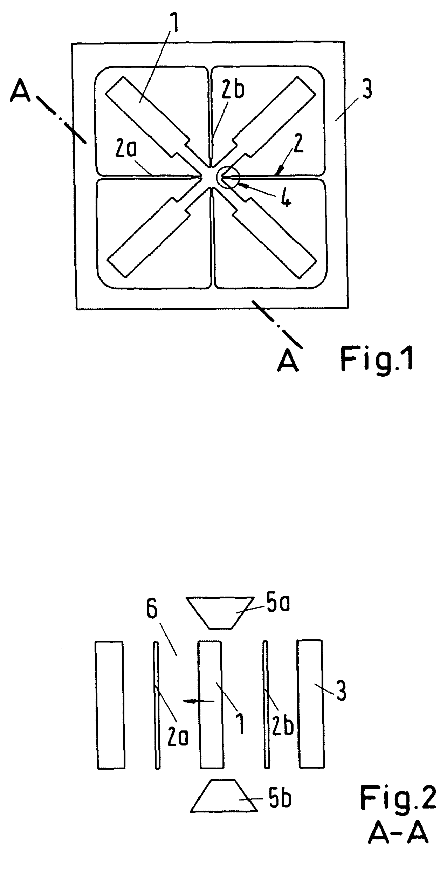

Die in Fig.1 dargestellte Anordnung ist Bestandteil eines paramagnetischen Sauerstoffsensors, dessen Messwertermittlung über die Erfassung und Auswertung von durch den Messeffekt hervorgerufenen elastischen Verformungen erfolgt. Ein hier kreuzförmig gestalteter Probenkörper 1 ist in seinem Schwerpunkt durch eine zweiachsige Aufhängung 2 gehalten. Der Probenkörper 1 besteht aus zwei symmetrisch zueinander angeordneten Teilkörpern gleicher Gestalt, wobei der Schwerpunkt des Probenkörpers 1 im durch die Aufhängung definierten Schwerpunkt des Systems liegt. Die zweiachsige Aufhängung 2 ist demgegenüber aus zwei zueinander orthogonal verlaufenden Aufhängungsachsen 2a, 2b gebildet, welche sich von einem äußeren die Anordnung umgebenden Halterahmen 3 nach innen erstrecken. Die aus Probenkörper 1, Aufhängung 2 sowie Halterahmen 3 bestehende Anordnung ist einstückig ausgebildet, und zwar in Form eines geätzten Silizium-Chips.

Die Aufhängung 2 ist zur Herbeiführung einer hohen Materialdehnung mit einer örtlichen Spannungskonzentratoreinheit 4 ausgestattet, innerhalb welcher ein - hier nicht weiter dargestelltes - piezoresistives Element angeordnet ist.

Gemäß des in Fig. 2 dargestellten Schnitts A-A lässt sich die Funktionsweise des paramagnetischen Sauerstoffsensors erläutern:

Der Probenkörper 1 ist zwischen zwei einander gegenüberliegenden magnetischen Polschuhen 5a und 5b angeordnet. In diesem Bereich befindet sich eine das Messgas enthaltene Messkammer 6. Der Messeffekt äußert sich in einer durch Schwingen des Probenkörpers 1 hervorgerufenen zyklischen Verformung im Bereich der Aufhängung 2.

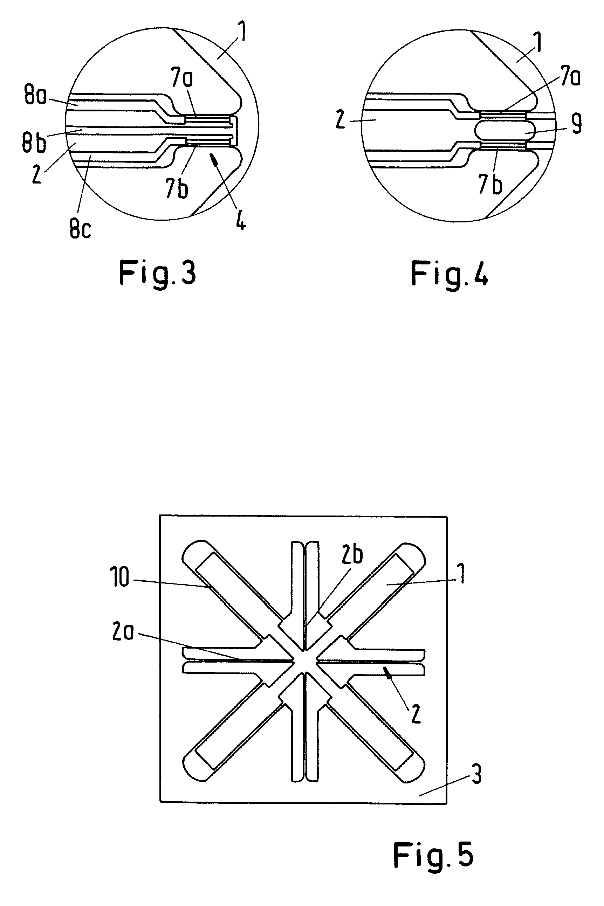

Wie detaillierter aus Fig.3 hervorgeht, ist im Bereich der Spannungskonzentratoreinheit 4 der Aufhängung 2 zwei piezoresistive Elemente 7a und 7b radial beabstandet voneinander angeordnet. Beide piezoresistiven Elemente 7a und 7b stehen mit elektrischen Leiterbahnen 8a bzw. 8b sowie 8c zur Bildung einer - nicht weiter dargestellten - Widerstandsbrücke in Verbindung. Die im Bereich der Spannungskonzentratoreinheit 4 durch den Messeffekt hervorgerufene elektrische Verformung führt eine entsprechende Materialdehnung im Bereich der piezoresitiven Elemente 7a und 7b herbei, welche diese Materialdehnung in einen entsprechenden Widerstandswert umwandeln. Hieraus lässt sich durch weiterführende - nicht weiter dargestellte - signalverarbeitungstechnische Auswertung die Sauerstoffkonzentration im Messgas ermitteln.

Die Spannungskonzentratoreinheit 4 der Aufhängung 2 befindet sich hier im Schnittbereich zum kreuzförmigen Probenkörper 1. Die Spannungskonzentratoreinheit 4 ist aus einer Verjüngung der Aufhängung 2 gebildet, worin die beiden piezoresistiven Elemente 7a und 7b radial beabstandet zueinander angeordnet sind. Durch diese spezielle Anordnung entstehen gegensinnige Spannungen, in den piezoresistiven Elementen 7a und 7b. Die in den piezoresistiven Elementen 7a bzw. 7b erzeugten Zug- bzw. Druckspannungen führen zu einer analogen Vergrößerung bzw. Verkleinerung des Widerstandswerts.

Gemäß der Ausführungsform der Fig.4 wird die radiale Beabstandung zwischen den beiden piezoresistiven Elementen 7a und 7b über einen Spalt 9 realisiert, der eine Art Graben zwischen beiden Elementen bildet. Diese Anordnung führt dazu, dass die Verteilung der Materialspannung gleichmäßiger wird durch unvermeidliche Fertigungstoleranzen bei der Einbringung der piezoresistiven Elemente 7a und 7b mit geringeren resultierenden Toleranzen des elektrischen Ausgangssignals des Sauerstoffsensors zu rechnen ist.

Die in Fig.5 dargestellte Variante der erfindungsgemäßen Lösung setzt eine kapazitive Auswertung des durch das paramagnetische Gas verursachten Drehmoments des Probenkörpers 1 um. Der kreuzförmige Probenkörper 1 ist - genau so wie bei der vorstehend beschriebenen Variante - durch eine zweiachsige Aufhängung 2 gehalten, welche aus zwei zueinander orthogonal verlaufenden Aufhängungsachse 2a und 2b besteht, die von einem äußeren Halterahmen 3 aus sich nach innen erstrecken.

Als Besonderheit dieser Variante ist der Halterahmen 3 jedoch mit sich ebenfalls nach innen erstreckenden Anformungen versehen, welche gemeinsam mit Abschnitten des Probenkörpers 1 einen elektrischen Kondensator bilden. Zu diesem Zwecke besteht zwischen den distalen Enden des Probenkörpers 1 und den modifizierten Anformungsabschnitten des ortsfesten Halterahmens 3 ein Kondensatorspalt 10. Hiermit lässt sich die aus der Schwingung des Probenkörpers 1 resultierende Änderung der elektrischen Kapazität erfassen, woraus signalverarbeitungstechnisch die Sauerstoffkonzentration im Messgas ermittelbar ist.

Die Erfindung beschränkt sich nicht auf beiden vorstehend genannten bevorzugten Ausführungsformen. Es sind vielmehr auch Alternativen hiervon denkbar, welche vom Schutzbereich der nachfolgenden Ansprüche umfasst sich. So ist es beispielsweise auch möglich, den paramagnetischen Sauerstoffsensor in beiden Varianten auch in Form eines größeren Messgeräts auszubilden. Die Umsetzung der erfindungsgemäßen Lösung allein in Form von Silizium-Sensoren ist also nicht zwingend.

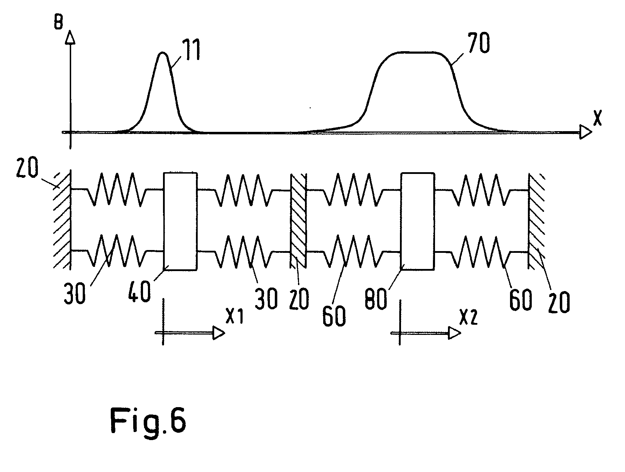

Figur 6 zeigt eine Ausgestaltung, gemäß einer anderen Alternative, nämlich gemäß Anspruch 4 ff. Ein Probenkörper 40 wird in einem inhomogenen Magnetfeld zu Schwingungen angeregt (z.B. durch einen zeitlich veränderlichen Strom in einer auf den Probenkörper aufgebrachten Leiterschleife).

Ein Probenkörper 80 wird in ähnlicher Art und Weise, aber in einem homogenen Magnetfeld zu Schwingungen angeregt.

Beide Probenkörper 40, 80 sind über federnde Aufhängungssysteme 30 und 60 mit ihrer konstruktiven Umgebung verbunden. Die Lage beider Probenkörper wird erfasst. Dies kann durch ein kapazitiv oder induktiv arbeitendes Lagedetektionssystem erfolgen. Denkbar ist auch, die Lage der Probenkörper indirekt durch eine Messung der Spannungsverhältnisse im Aufhängungssystem, (z.B. durch implantierte Piezowiderstände wie in der oben beschriebenen Form zu erfassen.

Die Bewegung beider Probenkörper 40 und 80 entlang der x-Achse hängt nun von den mechanischen Gegebenheiten (Masse, Federkonstanten), aber auch von den Gaseigenschaften ab. Einflüsse auf den Gesamtaufbau (z.B. durch Verlagerung der Probenkörper durch auf sich ändernde Lage im Schwerefeld oder durch Änderung der Federsteifigkeit des Aufhängungssystems durch Temperatureinflüsse) wirken auf beide Schwingungsbewegungen gleich. Auch Änderungen der Gaseigenschaften wirken auf beide Schwingungsbewegungen gleich. Bei Anwesenheit von Sauerstoff im die Probenkörper umgebenden Gasraum erfährt der Probenkörper A eine andere Änderung als der Probenkörper 80, da auf 40 eine durch den Paramagnetismus verursachte, einseitige Kraftänderung und durch einseitige Dichteunterschiede des Gases eine größere und vor allem von 80 unterschiedliche Dämpfung erfährt.

Prinzipiell sind auch andere Anordnungen denkbar, nämlich über Federelemente verkoppelte Probenkörper, die sich gegenseitig auch mechanisch beeinflussen, oder rotatorisch schwingende Probenkörper (dies hätte bei entsprechendem Design des Körpers (Auswuchtung) Vorteile hinsichtlich eines noch weiter reduzierten Einflusses externer Beschleunigungen)

Die Schwingungsanregung (insbesonder des Probenkörpers B) muss nicht durch eine Leiterschleife in einem Magnetfeld erfolgen. Dieser könnte auch mit Probenkörper A über Federelemente gekoppelt werden, um ohne separaten Antrieb eine Schwingungsbewegung auszuführen.

Die Schwingungsanregung kann auch durch andere Mechanismen erfolgen. Denkbar ist auch, den Gesamtaufbau durch externe Schwingungsanregung in Aktion zu versetzten und innerhalb des Sensors die Charakteristik der Schwingung zu messen.

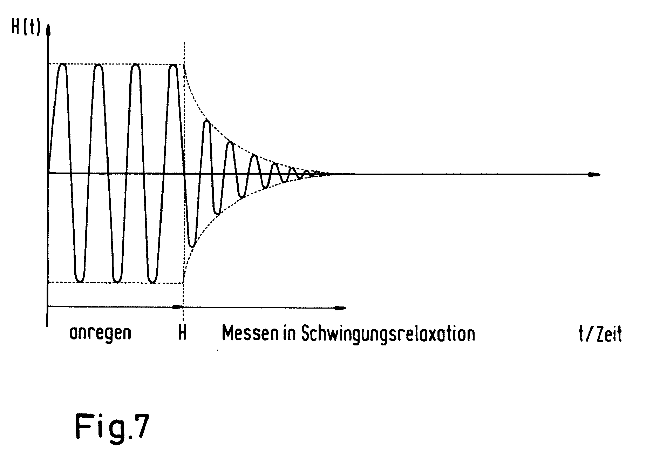

Figur 7 zeigt die Messung der Schwingungsparameter in der Relaxationsphase. Dabei erfolgt über eine erste Zeit eine Anregung des schwingungsfähigen Systems also des Probenkörpers, und am Zeitpunkt A wird die Anregung gestoppt, und die Schwingung relaxiert d..h sie läuft fortan gedämpft bis sie zur Ruhe kommt. Die Relaxationszeit sowie die ermittelbaren Dämpfungsparamter werden dann zur Berechung letztendlich der vorhandenen Sauerstoffkonzentration herangezogen.

In dem zuletzt geschilderten besonderen Ausgestaltungsbeispiel kann die Schwingungsanregung bis zum Zeitpunkt A über die Beaufschlagung der Piezokristalle mit elektrischer Spannung erfolgen, während am Zeitpunkt A, diese abgeschaltet wird, und stattdessen die am Piezokristall durch die schwingungsbedingte Verformung erzeugte Ausgangspannung gemessen, d.h. die Schwingung in der Relaxationsphase gemessen wird.

### Bezugszeichenliste

- **1**: Probenkörper
- **2**: Aufhängung
- 2a,2b: Aufhängungsachsen
- **3**: Halterahmen
- **4**: Spannungskonzentratoreinheit
- **5**: magnetischer Polschuh
- 5a,5b: Polschuhe
- **6**: Messkammer
- **7**: piezoresistives oder piezoelektrisches Element
- 7a, 7b: Elemente gemäß Positionsnummer 7
- **8**: Leiterbahn
- 8a,8b: Leiterbahnelemente
- **9**: Spalt
- **10**: Kondensatorspalt
- **11**: Verlauf des B-Feldes am Ort des Probenkörpers 40
- **20**: Befestigungselement
- **30**: Aufhängungssystem
- **40**: Probenkörper
- **60**: Aufhängungspunkt
- **70**: Verlauf des B-Feldes am Ort des Probenkörpers 80
- **80**: Probenkörper

## Patentansprüche

1. Paramagnetischer Gassensor mit mindestens einem beweglich befestigten Probenkörper, der sich in einem inhomogenen Magnetfeld und innerhalb einer das Messgas enthaltenden Messkammer befindet oder vom Messgas umgeben ist,
**dadurch gekennzeichnet, dass** der Gassensor in Mikrostrukturtechnik ausgeführt ist, und dass über zumindest teilweise in der Mikrostruktur implementierte oder darauf einwirkende Mittel (7, 8, 10) der oder die Probenkörper derart zu Schwingungen anregbar sind, dass damit zumindest über einen Parameter dieser Schwingung die Konzentrationsbestimmung einer Messgaskomponente im Messgas vornehmbar ist.

2. Paramagnetischer Gassensor nach Anspruch 1,
**dadurch gekennzeichnet,**
**dass** in oder auf der Mikrostruktur Sensoren (7) zur Auslesung der Schwingungsparameter angeordnet sind.

3. Paramagnetischer Gassensor nach Anspruch 1,
**dadurch gekennzeichnet,**
**dass** nur der Probenkörper (1) als einzige Schwingmasse vorgesehen ist.

4. Paramagnetischer Gassensor nach Anspruch 1,
**dadurch gekennzeichnet,**
**dass** mindestens eine weitere Schwingmasse (40, 80) vorgesehen ist, welche schwingungstechnisch an die erste Schwingmasse (1) angekoppelt ist, und ein Feder-Masse-/Probenkörper-System bildet.

5. Paramagnetischer Gassensor nach Anspruch 1,
**dadurch gekennzeichnet,**
**dass** zur Erzeugung eines inhomogenen, statischen oder zeitlich veränderlichen Magnetfeldes ein zumindest teilweise außerhalb der Mikrostruktur des Sensors implementiertes Erregersystem vorgesehen ist.

6. Paramagnetischer Gassensor nach Anspruch 1,
**dadurch gekennzeichnet,**
**dass** zur Erzeugung eines inhomogenen, statischen oder zeitlich veränderlichen Magnetfeldes ein Erregersystem eingesetzt wird, das zumindest teilweise in die Mikrostruktur des Sensors integriert ist.

7. Paramagnetischer Gassensor nach Anspruch 1,
**dadurch gekennzeichnet,**
**dass** der Probenkörper so platziert und aufgehängt ist, dass dieser parallel zur Chipoberfläche des Sensors schwingt.

8. Paramagnetischer Gassensor nach Anspruch 1,
**dadurch gekennzeichnet,**
**dass** der Probenkörper so platziert und aufgehängt ist, dass dieser orthogonal zur Chipoberfläche des Sensors schwingt.

9. Paramagnetischer Gassensor nach Anspruch 1,
**dadurch gekennzeichnet,**
**dass** zusätzlich zum ersten schwingenden Probenkörper mindestens ein weiterer schwingungsfähiger gelagerter Probenkörper angeordnet ist, der sich im homogenen Magnetfeld oder in einem näherungsweise magnetfeldfreien Bereich befindet.

10. Paramagnetischer Gassensor nach Anspruch 1,
**dadurch gekennzeichnet,**
**dass** zusätzlich zum ersten schwingenden Probenkörper mindestens ein weiterer schwingungsfähiger gelagerter Probenkörper angeordnet ist, der sich in einer Referenzgasatmosphäre oder im Vakuum befindet.

11. Paramagnetischer Gassensor nach Anspruch 1,
**dadurch gekennzeichnet,**
**dass** der Probenkörper (1) aus mehreren symmetrisch zueinander angeordneten Teilkörpern gleicher Gestalt besteht, wobei der Schwerpunkt des Probenkörpers (1) im durch die Aufhängung definierten Schwerpunkt des Systems liegt.

12. Paramagnetischer Gassensor nach Anspruch 1,
**dadurch gekennzeichnet, dass** der Probenkörper (1) kreuzförmig ausgebildet ist und in seinem Schwerpunkt durch eine zweiachsige Aufhängung (2) gehalten ist.

13. Paramagnetischer Gassensor nach Anspruch 1,
**dadurch gekennzeichnet, dass** die zweiachsige Aufhängung (2) aus zwei zueinander orthogonal verlaufenden Aufhängungsachsen (2a, 2b) gebildet ist, die sich von einem äußeren Halterahmen () aus nach Innen erstrecken.

14. Paramagnetischer Gassensor nach Anspruch 1,
**dadurch gekennzeichnet,**
**dass** der Probenkörper oder das Feder-Masse-/Probenkörper-System zungenförmig ausgebildet ist.

15. Paramagnetischer Gassensor nach Anspruch 1,
**dadurch gekennzeichnet,**
**dass** der Sensor im Wesentlichen durch Ätzverfahren aus einem Vollmaterial herausgearbeitet ist.

16. Paramagnetischer Gassensor nach Anspruch 1,
**dadurch gekennzeichnet,**
**dass** der Sensor zu wesentlichen Anteilen aus Silizium, Glas oder Diamant besteht.

17. Paramagnetischer Gassensor nach Anspruch 1,
**dadurch gekennzeichnet,**
**dass** zumindest Teile des Sensors durch Abscheideverfahren wie Gasphasenepitaxie, Aufdampfen oder Sputtern hergestellt sind.

18. Paramagnetischer Gassensor nach Anspruch 1,
**dadurch gekennzeichnet,**
**dass** die Mittel zur Erzeugung einer erzwungenen oder resonanten Schwingung direkt im oder auf dem Probenkörper oder der Probenkörperaufhängung implementiert sind.

19. Paramagnetischer Gassensor nach Anspruch 18,
**dadurch gekennzeichnet,**
**dass** das Mittel zur Erzeugung einer Schwingung ein piezoelektrisches Element nämlich ein Piezokristall ist, mit welchem elektrisch eine Verformung zur Erzeugung einer Schwingung generierbar ist.

20. Paramagnetischer Gassensor nach Anspruch 19,
**dadurch gekennzeichnet,**
**dass** das piezoelektrische Element auch Schwingungserfassungmittel ist, welches im Zeitmultiplex betreibbar ist.

21. Paramagnetischer Gassensor nach Anspruch 1 oder 18,
**dadurch gekennzeichnet,**
**dass** das Mittel zur Erzeugung einer Schwingung des Probenkörpers auf demselben oder in demselben eine Leiterschleife implementiert ist, in der ein zeitlich veränderter Strom fließt.

22. Paramagnetischer Gassensor nach einem der vorherigen Ansprüche,
**dadurch gekennzeichnet,**
**dass** der Probenkörper aus magnetischem oder diamagnetischem Material besteht und aufgrund seiner eigenen magnetischen Eigenschaften zu Schwingungen anregbar ist.

23. Paramagnetischer Gassensor nach einem der vorherigen Ansprüche,
**dadurch gekennzeichnet,**
**dass** zur Schwingungserfassung piezoresistive Elemente im Bereich der Probenkörperaufhängung vorgesehen sind.

24. Paramagnetischer Gassensor nach einem der vorhergehenden Ansprüche,
**dadurch gekennzeichnet,**
**dass** mindestens eine Spannungskonzentratoreinheit (4) pro Aufhängungsachse (2) vorgesehen ist, die sich im Schnittbereich zum kreuzförmigen Probenkörper (1) befindet.

25. Paramagnetischer Gassensor nach einem der vorhergehenden Ansprüche,
**dadurch gekennzeichnet,**
**dass** das piezoelektrische Element (7a, 7b) in dem Bereich der Aufhängung angeordnet ist, in welchem eine maximale Materialdehnung stattfindet.

26. Paramagnetischer Gassensor nach einem der vorhergehenden Ansprüche,
**dadurch gekennzeichnet,**
**dass** die Aufhängung (2) zur Herbeiführung einer hohen Materialdehnung mit einer örtlichen Spannungskonzentratoreinheit (4) ausgestattet ist.

27. Verfahren zum Betrieb eines paramagnetischen Gassensors mit mindestens einem beweglich befestigten Probenkörper der sich in einem inhomogenen Magnetfeld und innerhalb einer das Messgas enthaltenden Messkammer befindet oder vom Messgas umgeben ist,
**dadurch gekennzeichnet,**
**dass** der in Mikrostrukturtechnik ausgeführte Gassensor über zumindest teilweise in der Mikrostruktur implementierte oder darauf einwirkende Mittel im Bereich seines Probenkörpers oder eines Feder-Masse-/Probenkörper-Systems derart zu Schwingungen anregbar ist, dass damit zumindest über einen Parameter dieser Schwingung die Konzentrationsbestimmung einer Messgaskomponente im Messgas vornehmbar ist.

28. Verfahren nach Anspruch 27,
**dadurch gekennzeichnet,**
**dass** zur Schwingungsanregung entweder auf dem Probenkörper oder dem Feder-Masse-/Probenkörper-System angeordnete oder außerhalb derselben angeordnete Leiterschleifen so bestromt werden, dass durch induktive Ankoppelung eine Schwingung desselben entsteht.

29. Verfahren nach Anspruch 27,
**dadurch gekennzeichnet,**
**dass** zur Schwingungsanregung entweder auf dem Probenkörper oder dem Feder-Masse-/Probenkörper-System angeordnete oder außerhalb derselben angeordnete Piezokristalle so bestromt werden, dass dieselben in Schwingung versetzt werden.

30. Verfahren nach Anspruch 27,
**dadurch gekennzeichnet,**
**dass** die Schwingungsanregung extern erfolgt, z. B. durch Stoss, Schlag oder Vibration.

31. Verfahren nach Anspruch 29 oder 29 oder 30,
**dadurch gekennzeichnet,**
**dass** die Schwingungsanregung des Probenkörpers oder des Feder-Masse-/Probenkörper-Systems immer nahe seiner Resonanzfrequenz erfolgt.

32. Verfahren nach Anspruch 29 oder 29 oder 30,
**dadurch gekennzeichnet,**
**dass** der Probenkörper oder das Feder-Masse-/Probenkörper-System eine lineare Schwingung ausführt bzw ausführen.

33. Verfahren nach Anspruch 29 oder 29 oder 30,
**dadurch gekennzeichnet,**
**dass** der Probenkörper oder das Feder-Masse-/Probenkörper-System eine rotatorische Schwingung ausführt bzw ausführen.

34. Verfahren nach einem der vorhergehenden Ansprüche 27 bis 33,
**dadurch gekennzeichnet,**
**dass** die Schwingungsanregung durch Pulsation des Messgasstromes oder eines anderen pulsierenden Gasstromes erfolgt.

35. Verfahren nach einem der vorhergehenden Ansprüche 27 bis 33,
**dadurch gekennzeichnet,**
**dass** die Schwingungsanregung durch thermische Expansion des Gases im Gasraum, z. B. über gepulste Laserstrahleinkopplung, erfolgt.

36. Verfahren nach einem der vorhergehenden Ansprüche 27 bis 33
**dadurch gekennzeichnet,**
**dass** die Schwingungsanregung durch Oberflächenwellen erfolgt.

37. Verfahren nach einem der vorhergehenden Ansprüche 27 bis 36,
**dadurch gekennzeichnet,**
**dass** die Schwingungsanregung durch Schallwandlerschichten auf Basis von Elektreten erfolgt.

38. Verfahren nach einem der vorhergehenden Ansprüche 27 bis 38,
**dadurch gekennzeichnet,**
**dass** der ausgewertete Schwingungsparameter die Schwingungsfrequenz, der Offset, die Amplitude, die Abklingkurve oder die Dämpfung oder die Phasenbeziehung der Schwingungen des Probenkörpers oder des Feder-Masse-/Probenkörper-Systems zueinander ist.

39. Verfahren nach einem der vorhergehenden Ansprüche 27 bis 38,
**dadurch gekennzeichnet,**
**dass** der ausgewertete Schwingungsparameter die Phasenbeziehung der Schwingung des Probenkörpers relativ zu einer ungekoppelten Referenzschwingung ist.

40. Verfahren nach einem der vorhergehenden Ansprüche 27 bis 39,
**dadurch gekennzeichnet,**
**dass** der verschwenkbare Probenkörper (1) mit einem demgegenüber ortsfesten Halterahmen (3) einen elektrischen Kondensator bildet, um die aus der Verschwenkung resultierende Änderung der elektrischen Kapazität zu erfassen, woraus signalverarbeitungstechnisch die Sauerstoffkonzentration im Messgas ermittelt wird.

41. Verfahren nach einem der vorhergehenden Ansprüche 27 bis 40,
**dadurch gekennzeichnet,**
**dass** zur Vermeidung von Störeinflüssen der den elektrischen Kondensator bildende Bereich getrennt ist von der das Messgas enthaltenden Messkammer (6).

42. Verfahren nach einem der vorhergehenden Ansprüche 27 bis 41,
**dadurch gekennzeichnet,**
**dass** der oder die Schwingungsparameter über optische Elemente (z. B. durch Strahlablenkung oder andere Beeinflussung von Strahlparametern) gewonnen werden.

43. Verfahren nach einem der vorhergehenden Ansprüche 27 bis 42,
**dadurch gekennzeichnet,**
**dass** der oder die Schwingungsparameter über induktive Elemente ausgelesen werden.

44. Verfahren nach einem der vorhergehenden Ansprüche 27 bis 42,
**dadurch gekennzeichnet,**
**dass** der oder die Schwingungsparameter über ein Elektret ausgelesen werden.

45. Verfahren nach einem der vorhergehenden Ansprüche 27 bis 42
**dadurch gekennzeichnet,**
**dass** zur Optimierung des als elektrisches Signal vorliegenden Messeffekts eine Brückenbeschaltung des mindestens einen Erfassungs-Elements (7a, 7b), z. B. Piezoelements, zum Einsatz kommt.
